Europäisches Patentamt

European Patent Office

Office européen des brevets

(19)

(11) Publication number: **0 291 583**
**A1**

(12) **EUROPEAN PATENT APPLICATION**

(21) Application number: **87200956.8**

(22) Date of filing: **21.05.87**

(51) Int. Cl.⁴: **F23L 3/00 , F24C 3/00 ,**
**G01F 1/42**

(43) Date of publication of application:
**23.11.88 Bulletin 88/47**

(84) Designated Contracting States:
**DE FR IT**

(71) Applicant: **Apparatenfabriek ATAG B.V.**
**Postbus 8 Nijverheidsweg 1**
**NL-7071 CH Ulft(NL)**

(72) Inventor: **Hezemans, Ronald Hubertus**
**Theodorus Maria**
**Deken nijkampstraat 19**
**NL-7071 BN Ulft(NL)**

(74) Representative: **'t Jong, Bastiaan Jacobus et**
**al**
**OCTROOIBUREAU ARNOLD & SIEDSMA**
**Sweelinckplein 1**
**NL-2517 GK 's-Gravenhage(NL)**

(54) **Heating apparatus.**

(57) Apparatus comprising a burner (2), a flow duct (3) accommodating said burner and consisting of a feed duct (4) leading combustion air to said burner and a discharge duct (5) discharging combustion gas from said burner, a heat exchanger (11) located in said discharge duct through which can flow heat transfer medium, a fan (9) fitted in said flow duct and a control device (14) for controlling the operation of said burner and said fan. In the gas duct, an adjustable restriction (22, 25), a fixed restriction (26) after said adjustable one, and a pressure difference sensor (23) detecting the pressure difference on either side of said fixed restriction are arranged.

FIG 1

EP 0 291 583 A1

# HEATING APPARATUS

The invention relates to a heating apparatus comprising a burner, a flow duct accommodating the burner consisting of a feed duct leading combustion air to the burner and a discharge duct discharging combustion gas from the burner, a heat exchanger located in the discharge duct through which can flow heat transfer medium, a fan fitted in the flow duct and a control device for controlling the operation of the burner and the fan.

In such an apparatus the quantity of combustion air supplied to the burner through the feed duct as a result of the action of the fan depends upon the total flow resistance in the gas duct. Since the discharge duct must in any case lead to the outside, the length of this discharge duct depends on the user situation of the boiler. With a long discharge duct the total resistance in the flow duct is greater than with a short discharge duct. This means that when the burner is factory adjusted for the maximum flow resistance, that is, the maximum permissible discharge duct length, this burner has a lower yield with shorter discharge ducts because an excessive quantity of combustion air is supplied.

The invention has for its object to provide a heating apparatus of the type described in the preamble whereby there is no such resulting drawback.

This is achieved according to the invention by an adjustable restriction arranged in the gas duct, a fixed restriction arranged in the gas duct after the adjustable one, and a pressure difference sensor detecting the pressure difference on either side of the fixed restriction. As a result the total flow resistance in the flow duct can be set with the adjustable restriction at the value whereby the combustion air delivery is optimal for the burner. The difference in pressure over the fixed restriction is dependent on the flow speed, so that the adjustable restriction can be set such that the pressure difference sensor detects a predetermined pressure difference.

A simple and reliable embodiment is obtained with the step from claim 2. The pressure switch is factory set at the required value. The adjustable restriction is adjusted until the pressure switch comes into operation. At that moment the correct setting is reached.

When the switch contacts are break contacts the signal lamp will go out as soon as the required delivery develops. As soon as the burner and fan are switched off the lamp will light up again, thus constituting a permanent check on the proper setting of the regulable restriction.

Simple adjustability is achieved with the step from claim 4. From a virtually closed position the butterfly valve is opened stage by stage until the signal lamp indicates the setting in operation of the pressure switch. At that moment exactly the correct setting has been reached.

In order to eliminate the influence of the combustion at the location of the burner on the delivery in the flow duct, use is made of the step from claim 5. Adjustment can as a result be carried out without the burner being in operation, as a result of which great accuracy can be achieved.

The invention will be elucidated hereinafter with reference to the annexed drawings.

Fig. 1 shows schematically a heating apparatus according to the invention.

Fig. 2 shows schematically in detail view an embodiment of the apparatus according to the invention.

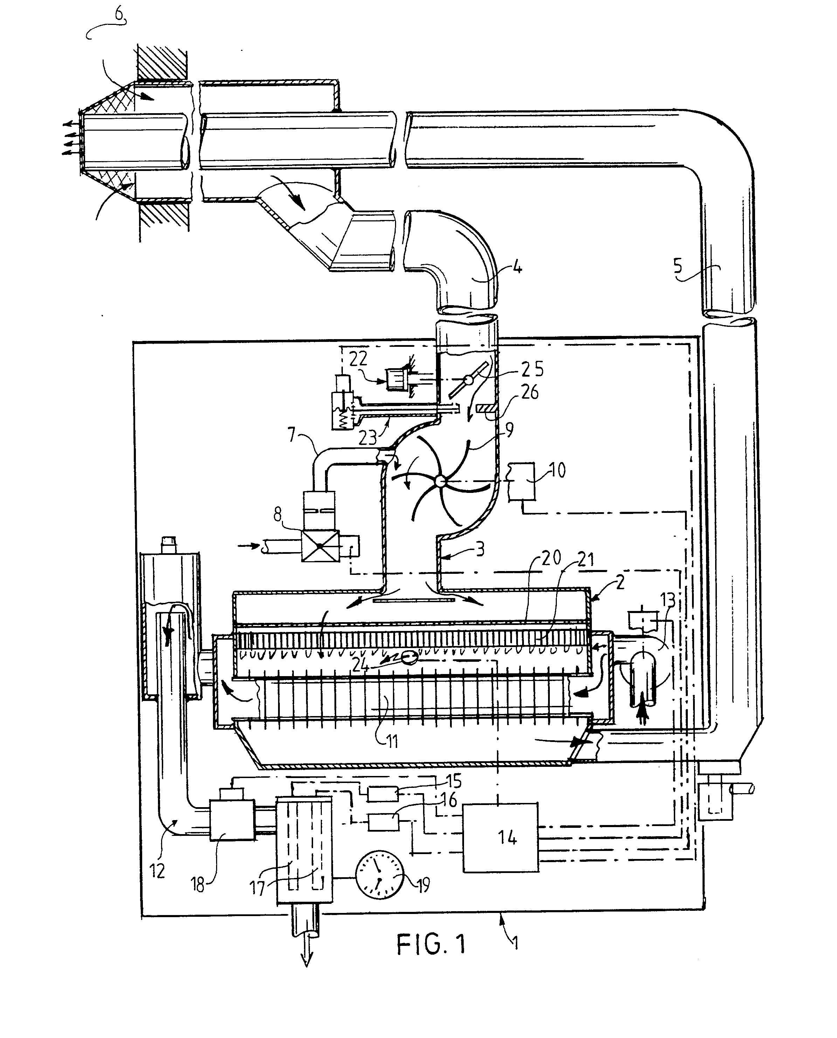

The heating apparatus 1 in fig. 1 comprises a burner 2 which in this embodiment takes the form of a so-called fully pre-mixed burner. Burner 2 is accommodated in a flow duct 3 which consists of a combustion air feed duct 4 and a combustion gas discharge duct 5. Feed duct 4 and discharge duct 5 respectively lead from and to the outside.

Accommodated in feed duct 4 is a fan 9 which is driven by a motor 10. At the location of the fan 9 gas is carried into the duct 4 via gas supply 7. This supply at the location of the fan 9 results in a good mixing of gas and combustion air. The supply of gas is regulated using gas tap 8.

Located in the combustion gas discharge duct 5 is a heat exchanger 11. This also forms part of the water circuit 12 in which water is force circulated using pump 13. The water supplied with pump 13 is heated in the heat exchanger 11.

The burner 2 comprises a perforated plate 20 for distribution of the supplied gas/air mixture and a ceramic burner plate 21 placed beneath it having a large number of fine channels. The supplied combustible mixture is ignited using the ignition 24 on the underside of ceramic plate 21.

Heating apparatus 1 further comprises a control device 14. Connected to control device 14 are a control thermostat 15 and a maximum thermostat 16 which co-operate with feelers 17 protruding into the heating water. Also fitted is a flow switch 18 so that the control device 14 can detect whether the pump 13 is functioning. The gas tap 8, the fan motor 10 and pump 13 are controlled by control device 14. In order to check whether there is sufficient water present in the circuit and to see what the water temperature is, a generally known pressure/ temperature gauge is fitted.

Arranged for adjustment of the resistance corresponding with an optimum combustion air delivery in the whole of the flow duct 3 is an adjustable compensating valve 22. Adjustment can be controlled with the pressure sensor 23.

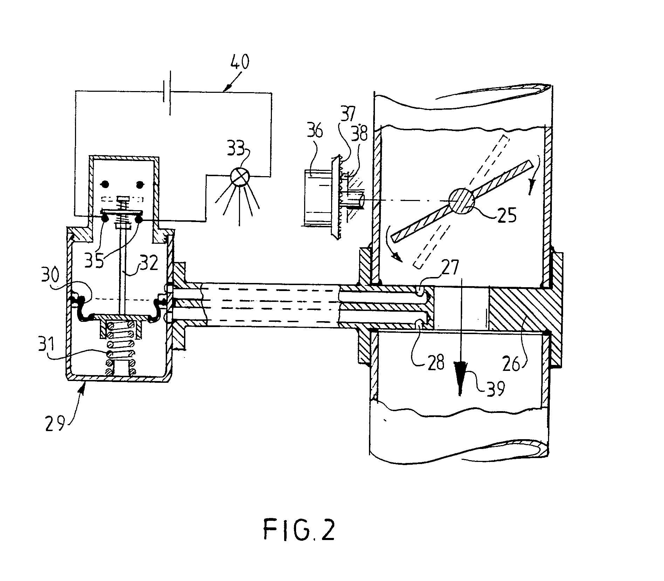

As fig. 2 shows in more detail, the compensating valve 22 comprises a butterfly valve 25. This butterfly valve 25 can be placed in a number of click-in positions since the control knob 36 is provided with toothing 37 which co-operates with a ratchet 38.

The fixed restriction or nozzle 26 is integrated in the embodiment in fig. 2 with a pressure difference sensor in the form of a pressure switch. Opening out on either side of restriction 26 are channels 27 and 28 which are connected with spaces on either side of a membrane 30 in the pressure switch 29. A spring 31 acts on membrane 30 on the underside. On the upper side the membrane is connected to a rod 32 which bears a switch member co-operating with contacts 35.

When the flow in the direction of arrow 39 increases the pressure difference in channel 27 and 28 increases. As a result membrane 30 moves downward counter to the action of spring 31. As soon as the switch member of rod 32 comes into contact with switch contacts 35 the lamp 33 in the feed circuit in which contacts 35 are incorporated will light up.

Setting of valve 25 after installation of the boiler 1 takes place as follows: Valve 25 is first completely closed. Using a bridge circuit not shown in the figure the motor 10 of fan 9 is switched on without burner 2 being operational. Because valve 29 is closed no flow will be created in the direction of arrow 39 and the pressure on either side of restriction 26 is therefore equal. The pressure switch 29 is in the position indicated with dashed lines. Using control knob 36 the valve 25 is then opened stage by stage. The air delivery thereby likewise increases in stages and therefore also the difference in pressure between channels 27 and 28. As soon as valve 25 has reached a position such that the difference in pressure in channels 27 and 28 results in switch contacts 35 being closed, signal lamp 33 will light up. The fixed restriction 26 is dimensioned in combination with pressure switch 29 and regulated at the factory such that this situation corresponds correctly with the optimum combustion air flow. Setting of the total flow resistance in the flow duct 3 of heating apparatus 1 is hereby completed.

## Claims

1. Heating apparatus comprising a burner, a flow duct accommodating said burner consisting of a feed duct leading combustion air to said burner and a discharge duct discharging combustion gas from said burner, a heat exchanger located in said discharge duct through which can flow heat transfer medium, a fan fitted in said flow duct and a control device for controlling the operation of said burner and said fan, characterized by an adjustable restriction arranged in the gas duct, a fixed restriction arranged in the gas duct after said adjustable one, and a pressure difference sensor detecting the pressure difference on either side of said fixed restriction.

2. Apparatus as claimed in claim 1, characterized in that the pressure difference sensor is a pressure switch which switches at a determined difference in pressure and electrical switch contacts of which are located in a feed circuit for a signal lamp.

3. Apparatus as claimed in claim 2, characterized in that the switch contacts are break contacts.

4. Apparatus as claimed in claim 2 or 3, characterized in that the adjustable restriction is a butterfly valve having a number of fixed click-in positions.

5. Apparatus as claimed in any of the foregoing claims, characterized in that the control device comprises a bridge circuit for separately switching on the fan.

FIG. 1

0 291 583

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 081 038  (ALLIED THERMAL CO.) <br> * Page 1, lines 1-23; page 2, lines 5-36; page 3, line 17 - page 6, line 15; figures 1-4 * | 1 | F 23 L    3/00 <br> F 24 C    3/00 <br> G 01 F    1/42 |
| Y | DE-A-3 041 265  (KRÄMER) <br> * Page 7, line 127 - page 8, line 150; figure 2 * | 1 | |
| A | FR-A-2 545 585  (LAURENT) <br> * Page 4, line 17 - page 5, line 15; figure 1 * | 1 | |
| A | GB-A-2 180 058  (ECONOSTO) <br> * Page 1, lines 63-73; page 2, lines 12-33,56-70; figures 1,3 * | 1 | |
| A | US-A-3 225 340  (KOCHEY) <br> * Column 3, lines 54-62,69-72; figures 1,3 * | 2,3 | |
| A | CH-A-  536 469  (ROBERTY) <br> * Whole document * | 4 | TECHNICAL FIELDS SEARCHED (Int. Cl.4) |
| A | FR-A-2 524 969  (LAURENT) <br> * Page 1, lines 17-30; page 2, lines 13-24; page 3, lines 16-26; page 4, line 37 - page 5, line 11; figure 2 * | 5 | F 23 L <br> F 23 M <br> F 23 N <br> F 24 C <br> F 24 F <br> F 24 H <br> G 01 F |
| A | US-A-3 129 587  (HALLANGER) | | |
| A | GB-A-  904 122  (SULZER) | | |
| E | NL-A-8 600 247  (ATAG) <br> * Whole document * | 1-5 | |

The present search report has been drawn up for all claims

| Place of search | Date of completion of the search | Examiner |
|---|---|---|
| THE HAGUE | 20-01-1988 | PHOA Y.E. |

EPO FORM 1503 03.82 (P0401)